# EUROPEAN PATENT SPECIFICATION

(11) **EP 0 475 222 B1**
(45) Date of publication and mention of the grant of the patent: **09.10.1996**
(21) Application number: 91114650.4
(22) Date of filing: 30.08.1991
(51) Int. Cl.: C08K 5/3415, C08L 21/00

(54) **Sulfur vulcanizable rubber compositions containing N,N'-(M-Phenylene)bismaleimide**
N,N'-(m-Phenylen)bismaleimide enthaltende, mit Schwefel vulkanisierbare Kautschukmassen
Composition de caoutchouc vulcanisable par du soufre, contenant du N,N'-(m-phénylène)-biamaleinimide

(30) Priority: 10.09.1990 US 579752
(43) Date of publication of application: 18.03.1992
(73) Proprietor: THE GOODYEAR TIRE & RUBBER COMPANY, Akron, Ohio 44316-0001 (US)
(72) Inventor: Wideman, Lawson Gibson, Tallmadge, Ohio 44278 (US); Sandstrom, Paul Harry, Tallmadge, Ohio 44278 (US)
(74) Representative: Leitz, Paul

(56) References cited:
- EP-A- 0 345 825
- EP-A- 0 418 188
- US-A- 4 605 696
- US-A- 4 818 601

## Description

### Background of the Invention

Many rubber articles, principally automobile tires, hoses, belts and the like are known as composites and are reinforced with fibers in cord form. In all such instances, the fiber must be firmly bonded to the rubber.

A frequent problem in making a rubber composite is maintaining good adhesion between the rubber and the reinforcement. A conventional method in promoting the adhesion between the rubber and the reinforcement is to pretreat the reinforcing fiber with a mixture of a rubber latex and a phenol-formaldehyde condensation product wherein the phenol is almost always resorcinol. This is the so called "RFL" (resorcinol-formaldehyde-latex) method. An alternative method of promoting such adhesion is to generate the resin in-situ (in the vulcanized rubber/textile matrix) by compounding a vulcanizing rubber stock composition with the phenol/formaldehyde condensation product (hereinafter referred to as the "in-situ method"). The components of the condensation product consist of a methylene acceptor and a methylene donor. The most common methylene donors include N-(substituted oxymethyl) melamine, hexamethylenetetramine or hexamethoxymethylmelamine. A common methylene acceptor is a dihydroxybenzene compound such as resorcinol. The in situ method has been found to be particularly effective where the reinforcing material is steel wire since pretreatment of the wire with the RFL system has been observed to be largely ineffective.

Resorcinol is known to form a resin network within a rubbery polymer by reacting with various methylene donors. Unfortunately, the use of resorcinol has some inherent disadvantages. Resorcinol is not readily dispersed in rubber and in fact neither the resin, nor the resorcinol become chemically bound to the rubber. Additionally, resorcinol in its raw form is excessively volatile and is potentially toxic, thus posing a health hazard. Another disadvantage in using resorcinol is periodic market shortages of supply.

There have been numerous attempts to replace resorcinol, however, few if any have had much success. For example, in US-A-4 605 696 there is disclosed a method for enhancing adhesion of rubber to reinforcing materials through the use of phenolic esters as the methylene acceptor. These phenolic esters are less volatile than resorcinol, but still offer no readily reactive site for chemically attaching the resin to the rubber.

Bismaleimides have been used in rubber as crosslinking aids with peroxide initiators. Bismaleimides, however, are not known to reinforce the sulfur vulcanizable rubbers by the formation of a resin network within the rubber.

US-A-4 818 601 relates to a rubber-cord composite body used for cord reinforcing rubber articles. The fiber cords are treated with an epoxy compound and a resorcin-formaldehyde-rubber latex adhesive and particular rubber composition containing a bismaleimide compound.

EP-A-345 825 relates to a rubber composition containing a bismaleimide.

EP-A-418 188 being postpublished relates to a vulcanizable rubber composition containing a methylene donor and hydroxy-aryl substituted monomaleimide.

Therefore, there exists a need to find a suitable replacement for resorcinol in an in-situ resin system while concomitantly improving increased peel adhesion and tear in rubber.

### Summary of the Invention

The present invention relates to a sulfur vulcanizable rubber composition as defined in the claims comprising a sulfur vulcanizable rubber, a sulfur vulcanizing agent and the reaction product of (a) from 0.1 to 50 phr of a methylene donor and (b) from 0.1 to 50 phr of N,N'-(m-phenylene)bismaleimide.

### Detailed Description of the Preferred Embodiment

The present invention relates to the incorporation of N,N'-(m-phenylene)bismaleimide as a component in a resin network within a sulfur vulcanizable rubber. An advantage of the present invention is that the N,N'-(m-phenylene)bismaleimide exhibits low volatility and resembles the reactivity of resorcinol in the in-situ resin method.

The present invention also relates to a sulfur vulcanizable rubber composition comprising: (1) a sulfur vulcanizable rubber, (2) a sulfur vulcanizing agent, (3) from 0.1 to 50 phr of a methylene donor, and (4) from 0.1 to 50 phr of N,N'-(m-phenylene)bismaleimide.

For purposes of the present invention, the N,N'-(m-phenylene)bismaleimide functions as a methylene acceptor. The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reactant that contributes the moiety that later forms into the methylene bridge is the methylene donor wherein the other reactant is the methylene acceptor.

The N,N'-(m-phenylene)bismaleimide that is included in the sulfur vulcanized rubber composition may vary depending upon the type of rubber and the desired physical properties, i.e., adhesion and tear. The amount ranges from 0.1 to 50 parts by weight per 100 parts by weight rubber (phr). Preferably, the amount of N,N'-(m-phenylene)bismaleimide ranges from 0.5 to 5.0 phr.

The combination of the N,N'-(m-phenylene)-bismaleimide with a methylene donor improves the properties of "sulfur vulcanizable elastomers or rubbers". The term "sulfur vulcanizable elastomer or rubber" as used herein embraces both natural and all its various raw and reclaim forms as well as various synthetic rubbers. Representative synthetic polymers include the homopolymerization products of butadiene and its homologues and derivatives, as for example, methyl- butadiene, dimethylbutadiene and pentadiene as well as copolymers such as those formed from butadiene or its homologues or derivatives with other unsaturated organic compounds. Among the latter are acetylenes, for example, vinyl acetylene; olefins, for example, isobutylene, which copolymerizes with isoprene to form butyl rubber; vinyl compounds, for example, acrylic acid, acrylonitrile (which polymerizes with butadiene to form NBR), methacrylic acid and styrene, the latter polymerizing with butadiene to form SBR, as well as vinyl esters and various unsaturated aldehydes, ketones and ethers, e.g. acrolein, methyl isopropenyl ketone and vinylethyl ether. Also included are the various synthetic rubbers prepared by the homopolymerization of isoprene and the copolymerization of isoprene and other diolefins in various unsaturated organic compounds. Also included are the synthetic rubbers such as 1,4-cis-polybutadiene and 1,4-cis-polyisoprene and similar synthetic rubbers.

Specific examples of synthetic rubbers include polybutadiene (including trans- and cis-1,4-polybutadiene), polyisoprene (including cis-1,4-polyisoprene), butyl rubber, copolymers of 1,3-butadiene or isoprene with monomers such as styrene, acrylonitrile and methyl methacrylate. The preferred synthetic rubbers for use in the present invention are polybutadiene, polyisobutylene, butadiene-styrene copolymers and cis,1,4-polyisoprene.

The sulfur vulcanizable rubber compositions of the present invention contain a methylene donor. The term "methylene donor" is intended to mean a compound capable of reacting with the N,N'-(m-phenylene)bismaleimide and generate the resin in-situ.

The methylene donor that is included in the sulfur vulcanized rubber composition may vary depending on the type of rubber and the desired physical properties, i.e., adhesion and tear. The amount may range from 0.1 to 50 phr. Preferably, the amount of methylene donor that is included ranges from 0.5 to 5.0 phr.

Examples of methylene donors which are suitable for use in the present invention include hexamethylene tetramine, hexaethoxymethylmelamine, hexamethoxymethylmelamine, lauryloxymethylpyridinium chloride, ethoxymethylpyridinium chloride, trioxan hexamethoxymethylmelamine, the hydroxyl groups of which may be esterified or partly esterified, and polymers of formaldehyde such as paraformaldehyde. In addition, the methylene donors may be N-substituted oxymethylmelamines, of the general formula: 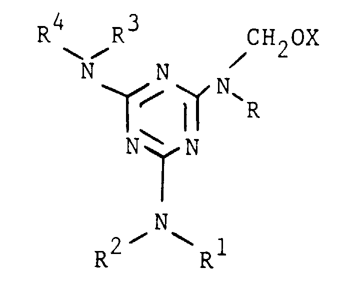 wherein X is an alkyl having 1 to 8 carbon atoms; R, R¹, R², R³ and R⁴ are individually selected from hydrogen, alkyl having from 1 to 8 carbon atoms, the group -CH₂OX or their condensation products. Specific methylene donors include hexakis(methoxymethyl) melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"tris(methoxymethyl) melamine and N,N',N"tributyl-N,N',N"-trimethylolmelamine. The N-methylol derivatives of melamine are prepared by known methods.

The weight ratio of methylene donor to the N,N'-(m-phenylene)bismaleimide can vary. Generally speaking, the weight ratio will range from 1:10 to 10:1. Preferably, the weight ratio ranges from 1:3 to 3:1.

The sulfur vulcanizable rubber composition of the present invention contains a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. The amount of sulfur vulcanizing agent will vary depending on the type of rubber and the particular type of sulfur vulcanizing agent that is used. Generally speaking, the amount of sulfur vulcanizing agent ranges from 0.1 to 5 phr with a range of from 0.5 to 2 being preferred.

The vulcanizable rubber composition for use in forming a composite with reinforcing material may be used in the manufacture of tires, belts or hoses. The rubber vulcanizate which is to be used to form the composite may contain conventional compounding ingredients such as carbon black, antidegradants, zinc oxide, accelerators, silica, processing and softening oils and the like. The methylene acceptor may be compounded in either the productive or nonproductive stock. Preferably, the methylene acceptor is compounded in the nonproductive stock because more uniform mixing is generally achieved. Incorporation of the methylene acceptor into the sulfur vulcanizable rubber may be accomplished by conventional means of mixing such as by the use of a Banbury or Brabender.

Cure properties were determined using a Monsanto oscillating disc rheometer which was operated at a temperature of 150°C and at a frequency of 11 hertz. A description of oscillating disc rheometers can be found in the Vanderbilt Rubber Handbook edited by Robert O. Babbit (Norwalk, Conn., R. T. Vanderbilt Company, Inc., 1978), pages 583-591. The use of this cure meter and standardized values read from the curve are specified in ASTM D-2084. A typical cure curve obtained on an oscillating disc rheometer is shown on page 588 of the 1978 edition of the Vanderbilt Rubber Handbook.

In such an oscillating disc rheometer, compounded rubber samples are subjected to an oscillating shearing action of constant amplitude. The torque of the oscillating disc embedded in the stock that is being tested that is required to oscillate the rotor at the vulcanization temperature is measured. The values obtained using this cure test are very significant since changes in the rubber or the compounding recipe are very readily detected. It is obvious that it is normally advantageous to have a fast cure rate.

The following tables report cure properties that were determined from cure curves that were obtained for the two rubber formulations that were prepared. These properties include a torque minimum (Min Torque), a torque maximum (Max Torque), minutes to 25% of the torque increase (t25 min.), and minutes to 90% of the torque increase (t90 min.).

Peel adhesion testing was done to determine the interfacial adhesion between various rubber formulations that were prepared. The interfacial adhesion was determined by pulling one compound away from another at a right angle to the untorn test specimen with the two ends being pulled apart at a 180° angle to each other using an Instron machine. The area of contact was determined from placement of a Mylar sheet between the compounds during cure. A window in the Mylar allowed the two materials to come into contact with each other during testing.

Adhesion to nylon was evaluated using the Tire Cord Adhesion Test (TCAT). Samples were prepared and tested according to the procedures described by D.W. Nicholson, D. I. Livingston, and G. S. Fielding-Russell, Tire Science and Technology (1978) 6, 114; G. S. Fielding-Russell and D. I. Livingston, Rubber Chemistry and Technology (1980) 53, 950; and US-A-4,095,465.

The following examples are presented in order to illustrate but not limit the present invention.

### Example 1

### Physical Testing

Table I below shows the basic rubber compound that was used in this example. The rubber compound was prepared in a three-stage Banbury mix. All parts and percentages are by weight unless otherwise noted.

The various samples were prepared using the respective amount (phr) of resin components listed in Table I. The cure data as well as other physical data for each sample are listed in Table II.

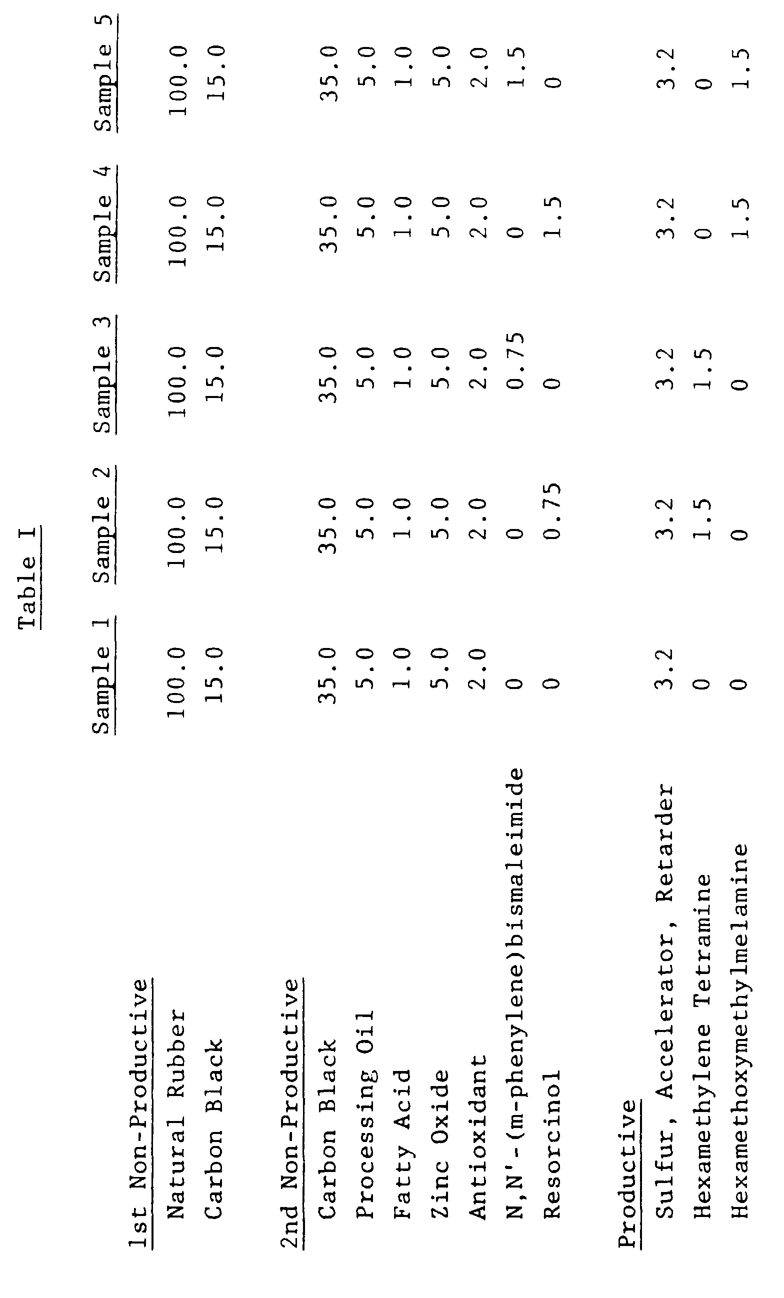

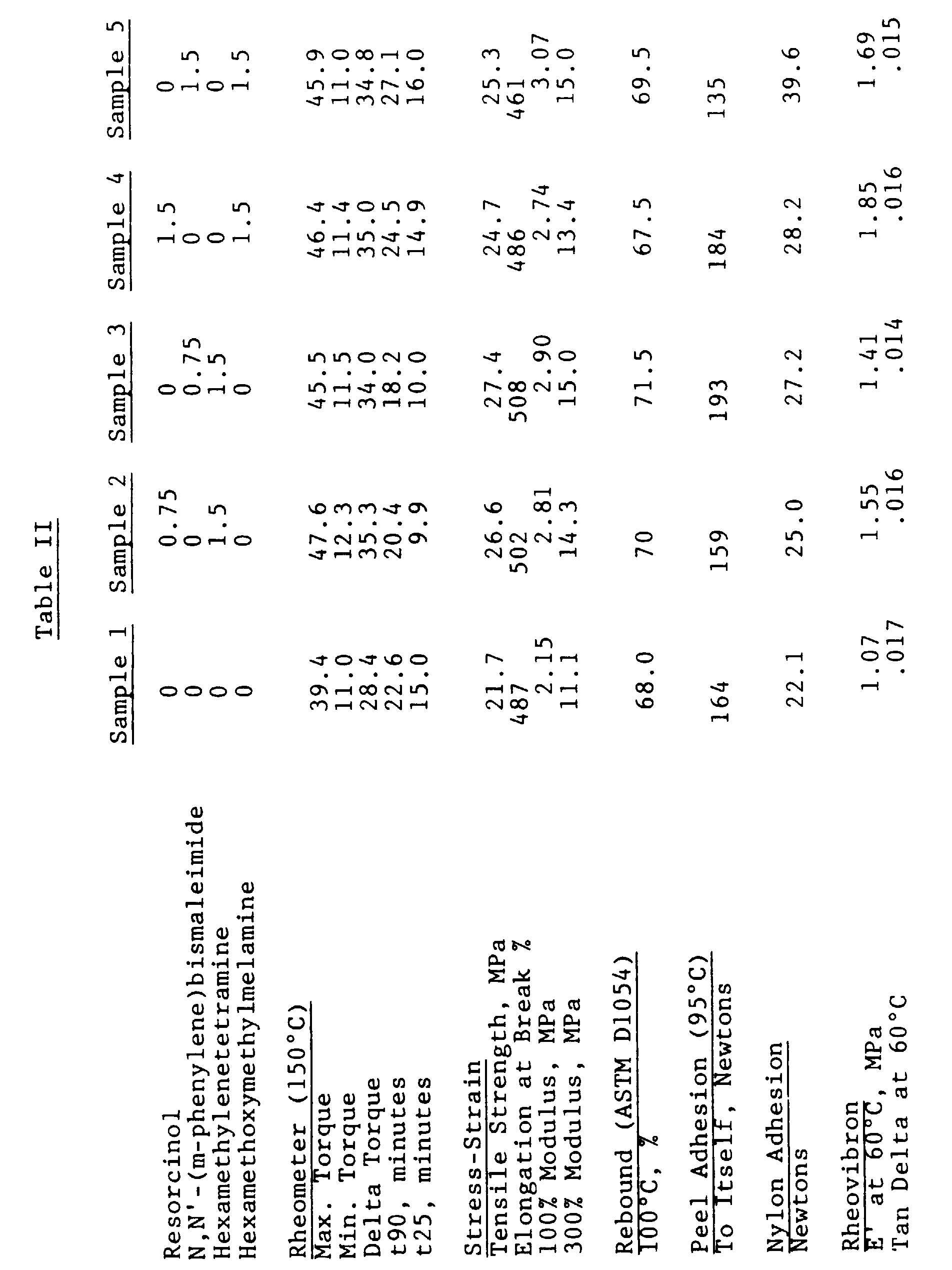

The replacement of resorcinol with N,N'-(m-phenylene)bismaleimide gives a resin formation as indicated by increased modulus (300%) over the control. The increase in Peel adhesion over the control (the formulation containing resorcinol) indicates attachment of the resin to the diene rubber through the maleimide tails. The combination of increased modulus and tear resistance is highly desirable and extremely difficult to achieve.

The combination of resorcinol and hexamethylene tetramine (Sample 2) gives a resin formation as indicated by an increase of maximum Rheometer torque, 300% modulus and Rheovibron E' at 60°C when compared to the control (Sample 1). The substitutions of N,N'-(m-phenylene)bismaleimide for resorcinol and combined with hexamethylene tetramine (Sample 3) also provides a resin formation as shown by maximum Rheometer torque, 300% modulus and Rheovibron E' when compared to the control (Sample 1). The bismaleimide compound (Sample 3) also exhibits higher rebound, higher peel adhesion to itself (tear) and also higher adhesion to nylon than the resorcinol compound (Sample 2). The combination of resorcinol and hexamethoxymethylmelamine (Sample 4) also shows resin formations as a result of higher maximum Rheometer torque, 300% modulus and Rheovibron E' at 60°C when compared to the control (Sample 1). The substitution of the maleimide for resorcinol and combined with the melamine (Sample 5) also exhibits resin formation from increases shown in Rheometer maximum torque, 300% modulus and Rheovibron E'. The maleimide again shows advantages over resorcinol (Sample 4) in providing higher rebound and significantly higher adhesion to nylon.

## Claims

1. A sulfur vulcanizable rubber composition including a sulfur vulcanizable rubber, a sulfur vulcanizing agent and the reaction product of (a) from 0.1 to 50 phr of a methylene donor and (b) from 0.1 to 50 phr of a methylene acceptor, characterized in that said methylene acceptor is N,N'-(m-phenylene)bismaleimide.

2. The composition of claim 1 characterized in that the rubber is selected from the group consisting of natural rubber, polybutadiene, polyisoprene, butyl rubber, EPDM, styrene/butadiene copolymers, terpolymers of acrylonitrile, butadiene and styrene and blends thereof.

3. The composition of claim 1 characterized in that the methylene donor is selected from the group consisting of hexamethylene tetramine, hexamethoxymethyl melamine, lauryloxymethyl pyridinium chloride, ethyloxymethyl pyridinium chloride, trioxan hexamethylolmelamine and paraformaldehyde.

4. The composition according to claim 1 characterized in that the methylene donor is selected from the general formula: 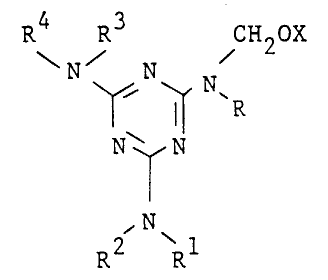 wherein X is an alkyl having from 1 to 8 carbon atoms, R, R¹, R², R³ and R⁴ are individually selected from the group consisting of hydrogen, an alkyl having from 1 to 8 carbon atoms, the group -CH₂OX or their condensation products.

5. The composition of claim 1 characterized in that the methylene donor is selected from the group consisting of hexakis(methoxymethyl)melamine, N,N',N"-trimethyl/ N,N',N"-trimethylolmelamine, hexamethylolmelamine, N,N',N"-dimethylolmelamine, N-methylolmelamine, N,N'-dimethylolmelamine, N,N',N"tris(methoxymethyl) melamine and N,N',N"tributyl-N,N',N"-trimethylol- melamine.

6. The composition of claim 1 characterized in that the weight ratio of methylene donor to the N,N'-(m-phenylene)bismaleimide ranges from 1:10 to 10:1.

7. The composition of claim 1 characterized in that the sulfur vulcanizing agent is selected from the group consisting of elemental sulfur, an amine disulfide, polymeric polysulfide or sulfur olefin adduct.

8. The composition of claim 7 characterized in that the sulfur vulcanizing agent ranges from 0.1 to 5 phr.

9. The composition of claim 1 characterized in that the amount of the N,N'-(m-phenylene)bismaleimide that is included in the sulfur vulcanizable rubber ranges from 0.5 to 5.0 phr.

10. The composition of claim 1 characterized in that the amount of the methylene donor ranges from 0.5 to 5.0 phr.

## Patentansprüche

1. Schwefel-vulkanisierbare Kautschuk-Zusammensetzung, umfassend einen Schwefel-vulkanisierbaren Kautschuk, ein Schwefel-Vulkanisationsmittel und das Reaktionsprodukt von (a) 0,1 bis 50 ThK eines Methylen-Donors und (b) 0,1 bis 50 ThK eines Methylen-Akzeptors, dadurch gekennzeichnet, daß der Methylen-Akzeptor N,N'-(m-Phenylen)bismaleimid ist.

2. Zusammensetzung nach Anspruch 1, dadurch gekennzeichnet, daß der Kautschuk aus der Gruppe ausgewählt ist, die besteht aus Naturkautschuk, Polybutadien, Polyisopren, Butylkautschuk, EPDM, Styrol/Butadien-Copolymeren, Terpolymeren von Acrylnitril, Butadien und Styrol und Mischungen davon.

3. Zusammensetzung nach Anspruch 1, dadurch gekennzeichnet, daß der Methylen-Donor ausgewählt ist aus der Gruppe, die besteht aus Hexamethylentetramin, Hexamethoxymethylmelamin, Lauryloxymethylpyridiniumchlorid, Ethyloxymethylpyridiniumchlorid, Trioxanhexamethylolmelamin und Paraformaldehyd.

4. Zusammensetzung nach Anspruch 1, dadurch gekennzeichnet, daß der Methylen-Donor ausgewählt ist aus der allgemeinen Formel: 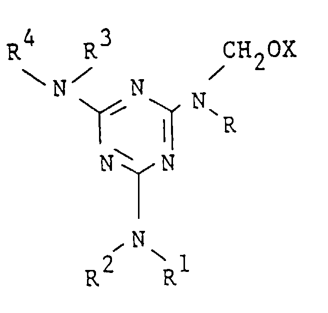 worin X Alkyl mit 1 bis 8 Kohlenstoffatomen darstellt, R, R¹, R², R³ und R⁴ einzeln ausgewählt sind aus der Gruppe, die besteht aus Wasserstoff, einem Alkyl mit 1 bis 8 Kohlenstoffatomen, der Gruppe -CH₂OX, oder deren Kondensationsprodukten.

5. Zusammensetzung nach Anspruch 1, dadurch gekennzeichnet, daß der Methylen-Donor ausgewählt ist aus der Gruppe, die besteht aus Hexakis(methoxymethyl)melamin, N,N',N"-Trimethyl/N,N',N"-trimethylolmelamin, Hexamethylolmelamin, N,N',N"-Trimethylolmelamin, N-Methylolmelamin, N,N'-Dimethylolmelamin, N,N',N"-Tris(methoxymethyl)melamin und N,N',N"-Tributyl-N,N',N"-trimethylolmelamin.

6. Zusammensetzung nach Anspruch 1, dadurch gekennzeichnet, daß das Gewichtsverhältnis von Methylendonor zu N,N'-(m-Phenylen)bismaleimid im Bereich von 1:10 bis 10:1 liegt.

7. Zusammensetzung nach Anspruch 1, dadurch gekennzeichnet, daß das Schwefel-Vulkanisationsmittel aus der Gruppe ausgewählt ist, die aus elementarem Schwefel, einem Amindisulfid, polymerem Polysulfid oder Schwefel-Olefin-Addukt besteht.

8. Zusammensetzung nach Anspruch 7, dadurch gekennzeichnet, daß das Schwefel-Vulkanisationsmittel im Bereich von 0,1 bis 5 ThK liegt.

9. Zusammensetzung nach Anspruch 1, dadurch gekennzeichnet, daß die Menge an N,N'-(m-Phenylen)bismaleimid, die im Schwefel-vulkanisierbaren Kautschuk eingeschlossen ist, im Bereich von 0,5 bis 5,0 ThK liegt.

10. Zusammensetzung nach Anspruch 1, dadurch gekennzeichnet, daß die Menge an Methylen-Donor im Bereich von 0,5 bis 5,0 ThK liegt.

## Revendications

1. Composition de caoutchouc vulcanisable au soufre englobant un caoutchouc vulcanisable au soufre, un agent de vulcanisation au soufre et le produit réactionnel de (a) de 0,1 à 50 phr d'un donneur de groupes méthylène et (b) de 0,1 à 50 phr d'un accepteur de groupes méthylène, caractérisée en ce que ledit accepteur de groupes méthylène est le N,N'-(m-phénylène)bismaléimide.

2. Composition selon la revendication 1, caractérisée en ce que le caoutchouc est choisi parmi le groupe constitué par le caoutchouc naturel, le polybutadiène, le polyisoprène, le caoutchouc butyle, le EPDM, des copolymères de styrène/butadiène, des terpolymères d'acrylonitrile, de butadiène et de styrène, ainsi que par leurs mélanges.

3. Composition selon la revendication 1, caractérisée en ce que le donneur de groupes méthylène est choisi parmi le groupe constitué par l'hexaméthylènetétramine, l'hexaméthoxyméthylmélamine, le chlorure de lauryloxyméthylpyridinium, le chlorure d'éthyloxyméthylpyridinium, la trioxanne-hexaméthylolmélamine et le paraformaldéhyde.

4. Composition selon la revendication 1, caractérisée en ce que le donneur de groupes méthylène est choisi à partir de la formule générale: 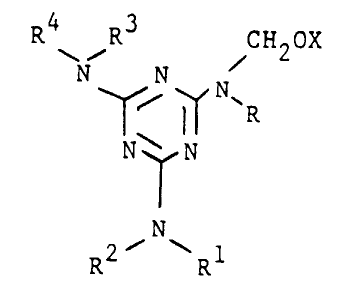 dans laquelle X représente un groupe alkyle contenant de 1 à 8 atomes de carbone, R, R¹, R², R³ et R⁴ sont choisis, individuellement l'un de l'autre, parmi le groupe constitué par un atome d'hydrogène, un groupe alkyle contenant de 1 à 8 atomes de carbone, le groupe -CH₂OX ou encore leurs produits de condensation.

5. Composition selon la revendication 1, caractérisée en ce que le donneur de groupes méthylène est choisi parmi le groupe constitué par l'hexakis(méthoxyméthyl)mélamine, la N,N',N"-triméthyl/N,N',N"-triméthylolmélamine, l'hexaméthylolmélamine, la N,N',N"-diméthylolmélamine, la N-méthylolmélamine, la N,N'-diméthylolmélamine, la N,N',N"-tris(méthoxyméthyl)mélamine et la N,N',N"-tributyl-N,N',N"-triméthylolmélamine.

6. Composition selon la revendication 1, caractérisée en ce que le rapport pondéral du donneur de groupes méthylène au N,N'-(m-phénylène)bismaléimide se situe dans le domaine de 1:10 à 10:1.

7. Composition selon la revendication 1, caractérisée en ce que l'agent de vulcanisation au soufre est choisi parmi le groupe constitué par le soufre élémentaire, un disulfure d'amine, un polysulfure polymère ou un adduit de soufre-oléfine.

8. Composition selon la revendication 7, caractérisée en ce que l'agent de vulcanisation au soufre se situe dans le domaine de 0,1 à 5 phr.

9. Composition selon la revendication 1, caractérisée en ce que la quantité du N,N'-(m-phénylène)bismaléimide inclus dans le caoutchouc vulcanisable au soufre se situe dans le domaine de 0,5 à 5,0 phr.

10. Composition selon la revendication 1, caractérisée en ce que la quantité du donneur de groupes méthylène se situe dans le domaine de 0,5 à 5,0 phr.
